# EUROPEAN PATENT APPLICATION

(11) **EP 4 382 751 A1**
(43) Date of publication of application: **12.06.2024**
(21) Application number: 23213706.7
(22) Date of filing: 01.12.2023
(51) Int. Cl.: F04D 29/28, H02K 9/06

(54) **FAN FOR ROTATING ELECTRICAL MACHINE**

(30) Priority: 09.12.2022 GB 202218545
(71) Applicant: Cummins Generator Technologies Limited, Peterborough PE2 6FZ (GB)
(72) Inventor: Tang, Jianguang, Peterborough, PE2 6FZ (GB); Yang, Peter, Peterborough, PE2 6FZ (GB)
(74) Representative: CSY London

(57) **Abstract**

A fan for a rotating electrical machine is disclosed. The fan (14) comprises a plurality of fan blades (16) and a flow separator (24) for separating a first airflow entering the fan from a radially outwards part of the machine and second airflow entering the fan from a radially inwards part of the machine. The flow separator (24) extends partway through the fan in a direction of airflow. This may help to improve the efficiency of the fan using a relatively simple construction and without adding to its length.

## Description

The present invention relates to a fan for a rotating electrical machine, and in particular a fan that can help to improve airflow through the machine.

Rotating electrical machines such as motors and generators generally comprise a rotor mounted on a shaft and arranged to rotate inside a stator. The rotor comprises a rotor core which holds rotor windings or permanent magnets. The rotor produces a rotating magnetic field which crosses an airgap between the rotor and the stator. The stator comprises a stator core which holds stator windings which combine with the rotating magnetic field. The stator itself may be held within a stator frame.

When the machine is in operation, currents passing through the stator and/or rotor windings, as well as other factors such as friction and windage losses, may cause the machine to heat up. Therefore many machines, particularly those of a larger design, require some form of cooling. This may be achieved by providing a fan for forcing airflow through the machine. Airflow through the machine is in a generally axial direction, with the main paths for the airflow being through the stator/frame airgap, the rotor/stator airgap and interpolar channels in the rotor.

In current rotating electrical machine designs, the cooling fan is typically mounted on the shaft, in front of the stator windings, with the fan inlet at the midpoint of the stator end windings. However, this can create a situation in which airflow from the around the stator collides with airflow from around the rotor at the entry point to the fan. This may cause a vortex in the fan impeller, reducing the overall efficiency of the fan. Furthermore, the airflow from the stator/frame airgap tends to be the more dominant, resulting in less cooling towards the centre of the machine where it may be needed more.

WO 2021/023985 A1, the subject matter of which is incorporated herein by reference, discloses a fan for an electrical generator. The fan comprises a plurality of fan blades and an inlet ring at an inlet to the fan. The inlet ring is angled so as to direct airflow from the stator/frame airgap towards stator end windings. By providing the fan with an angled inlet ring, it may be possible to divert airflow from a stator/frame airgap towards stator end windings and/or to reduce interaction between stator/frame and rotor/stator airflows, which may help to improve the cooling efficiency of the machine. However, airflows from the stator and rotor may still cause a vortex in the fan impeller, reducing the efficiency.

US 2011/0037330 A1, the subject matter of which is incorporated herein by reference, discloses an electric machine including a multichannel fan. The multichannel fan comprises a first set of fan blades which create a first air stream passing through the stator and a second set of fan blades which create a second air stream passing through the rotor. A solid web separates the two air streams. However, the arrangement of US 2011/0037330 requires the fan to be longer than would otherwise be the case, adding to the overall length of the machine. Furthermore, the fan has a complicated structure which may be difficult and costly to manufacture. In addition, the fan may not be as efficient as would be desired.

It would therefore be desirable to provide an arrangement which can improve the airflow through a rotating electrical machine while avoiding a complicated fan structure and avoiding the need to increase the length of the machine.

According to one aspect of the present invention there is provided a fan for a rotating electrical machine, the fan comprising:
a plurality of fan blades; and
a flow separator for separating a first airflow entering the fan from a radially outwards part of the machine and second airflow entering the fan from a radially inwards part of the machine,
wherein the flow separator extends partway through the fan blades in a direction of airflow.

The present invention may provide the advantage that, by providing a flow separator that extends partway (but not the whole way) through the fan blades in a direction of airflow, it may be possible to reduce or prevent interaction between the two airflows while using a single set of fan blades. This may help to improve the efficiency of the fan using a relatively simple construction and without adding to the length of the fan. In addition, the flow separator may help to balance stator/frame and rotor/stator airflows, thereby improving the cooling at the centre of the machine.

The fan preferably comprises a single set of fan blades, which are preferably spaced apart circumferentially around the fan. The fan blades are preferably centrifugal blades, and are preferably arranged to dispel air radially. The fan is preferably arranged such that airflow enters the fan in a substantially axial direction and exits the fan in a substantially radial direction.

The machine may comprise a stator and a rotor. In this case, the first airflow may be airflow from around the stator, and the second airflow may be airflow from around the rotor. For example, the first airflow may be from a stator/frame airgap and the second airflow may be from a rotor/stator airgap and/or rotor interpolar channels. Thus, the flow separator may help to reduce or prevent interaction between airflows which would otherwise enter the fan from different directions. This may help to prevent or reduce a vortex in the fan impeller, thereby improving the efficiency of the fan.

The flow separator is preferably annular. For example, the flow separator may be in the form of an annular vane, with an inside surface and an outside surface, which may be substantially concentric. The flow separator may define a first annular entry path on its radially outwards side and a second annular entry path on its radially inwards side. The first airflow may enter the fan through the first airflow path and the second airflow may enter the fan through the second airflow path. This may help to avoid interaction between the two airflows.

The flow separator may comprise a leading end which extends axially forwards (upstream) from the fan blades. This may help to keep the two airflow paths separate as they enter the fan. The leading end of the flow separator may be substantially cylindrical. Alternatively, the leading end of the flow separator may be at least partially curved. For example, the leading end of the flow separator may curve in a radially outwards direction as it extends axially forwards from the fan blades. This may help to direct the first airflow into the fan blades and/or help to collect the second airflow.

The flow separator is preferably arranged such that the first airflow and the second airflow converge (or merge) in the fan blades (i.e. between adjacent fan blades circumferentially). This may allow the same fan blades to create the first airflow and the second airflow, which may help to improve efficiency and reduce or avoid the need to extend the length of the fan.

The fan is preferably arranged such that the first airflow and the second airflow are in substantially the same direction at their confluence. For example, the flow separator may be arranged to redirect the first airflow and/or the second airflow such that they are both substantially in the same direction. This may help to reduce or prevent interaction between the two airflows, thereby improving fan performance.

The flow separator may comprise a trailing end which meets or extends partway into the fan blades. The trailing end may extend, for example, less than 50%, 25% or 10% into the fan blades.

In one embodiment, slots may be provided in either the fan blades or the flow separator, or both, to allow the trailing end to extend partway into the fan blades. Thus, at least some of the fan blades may comprise slots which at least partially accommodate the trailing end of the flow separator and/or the flow separator may comprise slots which fit around the fan blades. Alternatively, the fan blades and the flow separator (and optionally other parts of the fan) may be produced as a single piece, for example, by moulding or casting.

The trailing end of the flow separator may be arranged to turn the first airflow from a substantially axial direction to a substantially radial direction. For example, the trailing end may have a profile which curves from a substantially axial direction to a substantially radial direction, in a direction of airflow. This may help to ensure that the two airflows are in approximately the same direction at their confluence. In one embodiment, the trailing end of the flow separator has a curved meridional profile (an elliptic curve), although other profiles, such as a non-continuous curve, are also possible.

The fan may further comprise a backplate for turning airflow from a substantially axial direction to a substantially radial direction. For example, the backplate may be arranged to turn the second airflow from a substantially axial direction to a substantially radial direction. This may help to direct airflow radially outwards and/or to ensure that the two airflows are in approximately the same direction at their confluence. The backplate may, for example, have a surface with a curved meridional profile, although other profiles could be used instead.

The fan may further comprise an inlet ring. This may help to improve the performance of the fan, by guiding airflow entering the fan towards a radially inward part of the (centrifugal) fan blades. The inlet ring may be arranged to direct airflow from a radially outwards part of the machine towards the flow separator. For example, the inlet ring may direct airflow from a stator/frame airgap towards the flow separator. This may help to ensure that the fan is able to create airflow through different parts of the machine in an efficient manner.

The inlet ring may be substantially annular, and may be connected to the fan blades (for example, a radially outwards and/or axially forwards part of the fan blades). The inlet ring may be arranged to face a stator/frame airgap. The inlet ring may be arranged to divert airflow from a substantially axial direction to a substantially radial direction.

A leading end of the flow separator may be located radially inwards of the inlet ring. In this case, a first annular entry path may be defined between an inner edge of the inlet ring and a radially outwards side of the flow separator. The leading end of the flow separator preferably extends forwards (upstream) of the inlet ring (preferably in an axial direction), which may help to keep the two airflow paths separate as they enter the fan.

The fan may further comprise a hub for connecting the fan to a shaft. In this case, a leading end of the flow separator may be located radially outwards of the hub. A second annular entry path may be defined between the hub and a radially inwards side of the flow separator.

Where the fan has an inlet ring, a trailing end of the flow separator may have an outside diameter which is substantially equal to an inside diameter of the inlet ring. This may help to ensure that the inlet ring and the flow separator cooperate to ensure smooth airflow through the fan, while avoiding the flow separator being longer than necessary.

In addition to the above benefits, it has been found that a fan with a flow separator can make use of curved radial blades instead of flat radial blades due to the reduced interaction between the airflows. Thus, in one embodiment, the fan blades may be curved. For example, the fan blades may be curved in a radial direction and/or include a curved tip. This may also help to achieve better fan performance. Alternatively, other types of fan blade such as flat radial blades could be used instead or as well.

The fan may be manufactured from any suitable material such as metal, plastic, glass fibre or a combination of different materials. The fan may be manufactured using any appropriate manufacturing technique such as casting, moulding or fabrication, or a combination thereof.

It has been found that the fan described above can produce a good thermal performance, but may be difficult to manufacture as a single piece. Thus, in some embodiments of the invention, the fan is assembled from two separate parts.

For example, in one embodiment, the fan comprises a fan body and the flow separator, and the flow separator is a separate component from the fan body. In this case, the fan body and the flow separator may each be produced separately using any appropriate technique, such as casting or moulding, using any appropriate material, such as metal, plastic or glass fibre. If desired, the flow separator could be produced from a different material from the fan body. The flow separator may be attached to the fan body once the two separate components have been produced. This may facilitate manufacture of the fan.

Furthermore, the flow separator can be easily added, removed or adapted to suit the circumstances, which may further facilitate manufacturing.

In one embodiment, the flow separator is part of a flow separator component. The flow separator component may comprise the flow separator and an attachment ring. The flow separator may be connected to the attachment ring and the attachment ring may be attached to the fan. For example, the attachment ring may be annular and may be arranged to attach to an inlet ring. A plurality of connecting members may connect the flow separator to the attachment ring. The connecting members may be arranged to align with the fan blades, which may help to avoid obstruction of airflow.

In this embodiment, the fan blades may comprise recesses, and the connecting members may be accommodated in the recesses. Thus, the connecting members may act as extensions of the fan blades. This may allow the flow separator to be attached to the fan while minimising any impact on the fan's performance.

In another embodiment, the fan blades comprise slots and the flow separator is accommodated in the slots. In this case, the flow separator may be rotatable in the slots to help secure the flow separator to the fan. Alternatively, or in addition, the flow separator may comprise slots which fit around part of the fan blades.

The flow separator may be a single part, or a plurality of different parts. In the case of a single part, the flow separator may comprise slots to allow it to be inserted into the fan. The flow separator may then be rotated in slots in the fan blades, to move the slots in the flow separator away from the fan blades. This may help to ensure that the flow separator remains attached to the fan. The flow separator may also be attached to the fan blades using appropriate attachment means such as pins, welding, rivets or adhesive.

Where the flow separator comprises a plurality of parts, each part may be partially annular, and may extend through an angle of less than 180° circumferentially. This may allow each part to be inserted separately into slots in the fan blades. Once all of the parts have been inserted, they may be connected together using any appropriate attachment means such as pins, welding, rivets or adhesive. The number of parts may be, for example, two, three, four or more. Each part may extend through the same angle circumferentially, or different parts may extend through different angles. Preferably, once assembled, the plurality of parts extend through a total angle of approximately 360° circumferentially, although a value less than this could also be used.

In a further embodiment, the fan may be divided into a front part and a rear part, axially. For example, the fan may be divided along a plane which is perpendicular to the axial direction, and which passes through a central part of the fan axially. This may allow the two parts to be produced separately and then brought together to create the fan. The two parts may be attached together using any appropriate fastening means, such as welding, rivets, bolts, pins, adhesives or any combination thereof.

If desired, a combination of the various embodiments described above could be used.

In another embodiment of the invention, the fan is manufactured as a single piece. It has been found that this may be facilitated using flat radial fan blades. Thus, in one embodiment, at least some of the fan blades are flat radial blades and the fan is manufactured as a single piece.

According to another aspect of the invention there is provided a rotating electrical machine comprising a stator, a rotor and a fan in any of the forms described above.

The flow separator may be arranged such that airflow from around the stator enters the fan separately from airflow from around the rotor. For example, the machine may comprise a stator/frame airgap and airflow may pass around the stator through the stator/frame airgap. The machine may comprise a rotor/stator airgap and airflow may pass around the rotor through the rotor/stator airgap and/or through rotor interpolar channels. In this case, the fan may be arranged such airflow from the stator/frame airgap enters the fan radially outwards of the flow separator and airflow from the rotor/stator airgap and/or rotor interpolar channels enters the fan radially inwards of the flow separator.

A leading end of the flow separator may have a diameter substantially equal to an outside diameter of the rotor. This may help to separate the two airflows. For example, this may help to separate airflow from a stator/frame airgap and airflow from a rotor/stator airgap and/or rotor interpolar channels.

The stator may comprise stator end windings, and a leading end of the flow separator may be located radially inwards of the stator end windings and overlapping the stator end windings in an axial direction. This may help to separate airflow from a stator/frame airgap and airflow from a rotor/stator airgap and/or rotor interpolar channels.

The flow separator may be configured to increase a proportion of airflow around the rotor (rather than, or with respect to, around the stator), in comparison to the case where the flow separator is not present. This may be achieved by adjusting the position and/or shape of the flow separator. For example, the flow separator may be configured such that a first entry path for the first airflow has a smaller area in cross-section than a second entry path for the second airflow. This may help to balance the airflows around the stator and the rotor, thereby improving the cooling towards the centre of the machine.

The rotating electrical machine may further comprise a shaft. In this case, the fan may be mounted on the shaft. The rotating electrical machine may further comprise an adaptor for connecting the rotating electrical machine to a prime mover. In this case, the fan may be located inside the adaptor. The adaptor may include vents through which air may be expelled (preferably in a substantially radial and/or tangential direction).

Corresponding methods may also be provided. Thus, according to another aspect of the invention, there is provided a method of cooling a rotating electrical machine using a fan, the fan comprising a plurality of fan blades and a flow separator, the method comprising:
drawing airflow through the machine using the fan; and
separating airflow entering the fan from a radially outwards part of the machine from airflow entering the machine from a radially inwards part of the machine using a flow separator, the flow separator extending partway through the fan blades in a direction of airflow.

Preferably a single set of fan blades is used to draw airflow through the machine. The single set of fan blades may comprise a plurality of fan blades spaced apart circumferentially. The first airflow and the second airflow are preferably arranged to converge or merge in the fan blades.

Features of one aspect of the invention may be provided with any other aspect. Apparatus features may be provided with method aspects and vice versa.

In the present disclosure, terms such as "radially", "axially" and "circumferentially" are generally defined with reference to the axis of rotation of the fan and/or rotating electrical machine unless the context dictates otherwise.

Preferred embodiments of the present invention will now be described, purely by way of example, with reference to the accompanying drawings, in which:
Figure 1 is a radial cross-section through part of a rotating electrical machine;
Figure 2 is a plot showing airflows through a known machine;
Figure 3 is a perspective view of a fan in an embodiment of the invention;
Figure 4 is a cutaway view through part of the fan of Figure 3;
Figure 5 is a cutaway view through part of a rotating electrical machine with the fan of Figures 3 and 4;
Figure 6 illustrates airflow through the machine of Figure 5;
Figure 7 shows a plot of airflow through the fan of Figures 3 to 6;
Figures 8 and 9 show how a fan with a flow separator may be manufactured in one embodiment;
Figures 10 to 13 show how a fan with a flow separator may be manufactured in another embodiment;
Figures 14 to 16 show how a fan with a flow separator may be manufactured in another embodiment;
Figures 17 to 19 show how a fan with a flow separator may be manufactured in another embodiment; and
Figures 20 to 22 show a fan with a flow separator in a further embodiment.

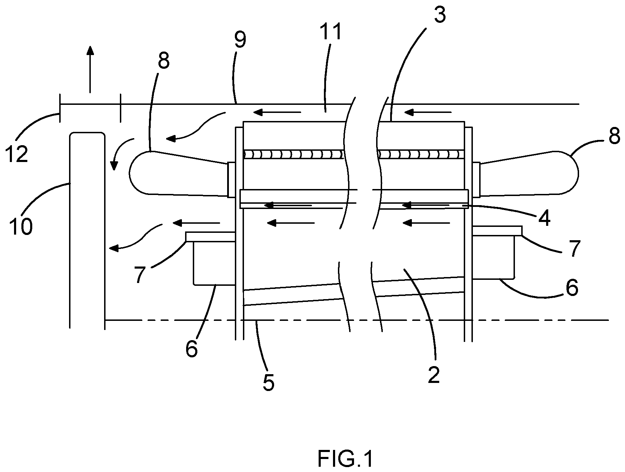

Figure 1 is a radial cross-section through part of a rotating electrical machine. Referring to Figure 1, the machine comprises a rotor 2 located inside a stator 3 with an airgap 4 between the two. The rotor 2 is mounted on a shaft with an axis of rotation indicated by the dashed line 5. The rotor 2 comprises a plurality of salient poles on which are wound rotor windings 6. The rotor windings 6 are held in place by a rotor winding support bar 7. Interpolar channels may be provided which run in an axial direction between adjacent rotor poles. The stator 3 comprises a stator core with slots on its inner circumference in which are wound stator windings 8. The stator 3 is contained within a stator frame 9. A shaft-driven fan 10 is located at the drive end of the machine, in order to draw cooling air through the machine. This airflow is predominately in an axial direction through, on one hand, the stator/frame airgap 11 and on the other hand the rotor/stator airgap 4 and the interpolar channels on the rotor, as indicated by the arrows in Figure 1. The fan 10 is located inside an adaptor 12 which is used to connect the machine to a prime mover. Airflow enters the fan in a generally axial direction, and exits the fan in a generally radial direction through the adaptor 12.

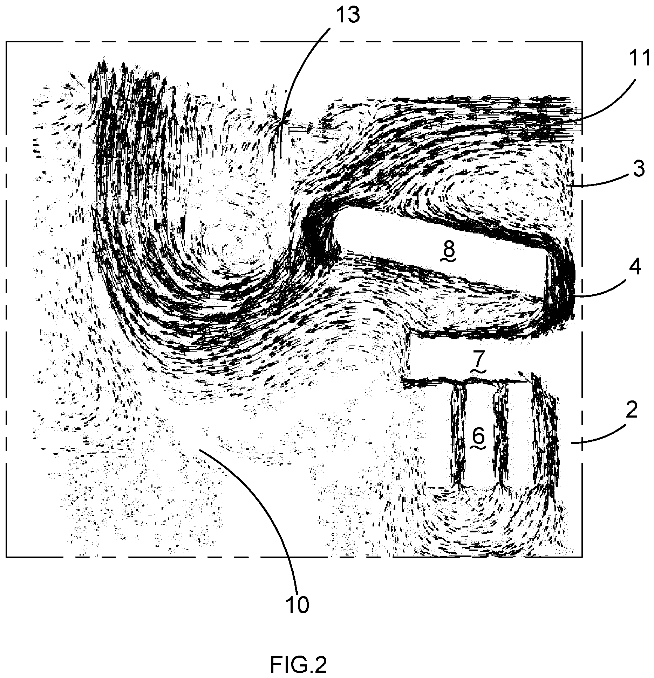

Figure 2 is a plot showing airflows through a machine in a known arrangement. Referring to Figure 2, it can be seen that airflow exits the stator/frame airgap 11 in a predominantly axial direction, and is then turned in a generally radial direction around the end of the stator end windings 8 by an inlet ring 13 on the fan 10. This airflow then enters the fan 10 in a direction having a significant radial component. On the other hand, airflow through the rotor/stator airgap 4 and interpolar channels in the rotor 2 enters the fan 10 in a predominately axial direction. The interaction of the airflows causes a vortex in the fan impeller behind the inlet ring 13. This reduces the amount of airflow in contact with the fan blades, which reduces the efficiency of the fan.

It can also be seen from Figure 2 that a greater proportion of the airflow mass is through the stator/frame airgap 11 rather than the rotor/stator airgap 4. However, for optimum cooling, it would be desirable to increase the proportion of airflow through the rotor/stator airgap 4.

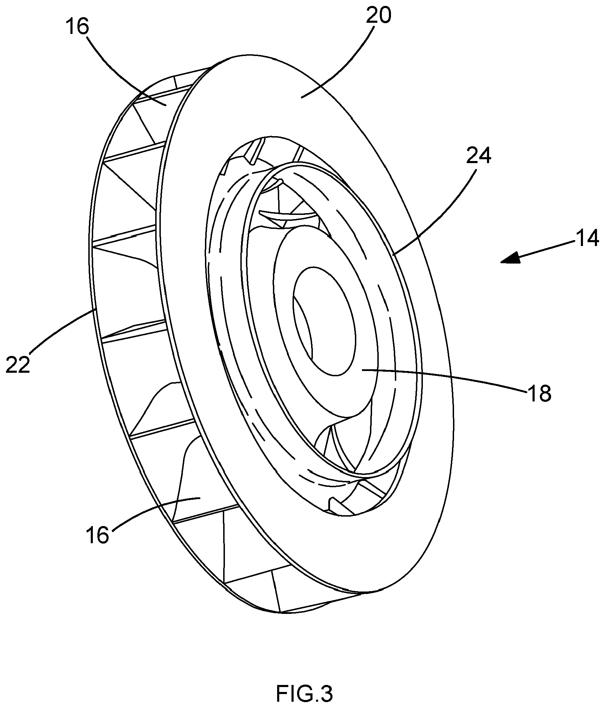

Figure 3 is a perspective view of a fan in an embodiment of the invention. The fan is designed for use with a rotating electrical machine such as that illustrated in Figure 1. Referring to Figure 3, the fan 14 comprises a plurality of fan blades 16, a hub 18, an inlet ring 20 and a backplate 22. The fan blades 16 are spaced circumferentially around the fan 14 and extend outwards from the hub 18 in a generally radial direction. The hub 18 is used to mount the fan 14 on the shaft of the machine. The inlet ring 20 is connected to the fan blades 16 at the front of the fan in the airflow direction. The inlet ring is annular, with an inner edge which defines a central aperture for entry of airflow into the fan. The backplate 22 is connected to the hub 18 and the fan blades 16 at the rear of the fan in the airflow direction. The inside surface of the backplate 22 (on the side of the fan blades 16) has a curved meridional profile (an elliptic curve). The backplate 22 curves from a substantially axial direction in the vicinity of the hub 18 to a substantially radial direction at its radially outwards edge. The fan blades 16 are centrifugal blades which are arranged to dispel air radially (and tangentially) outwards under centrifugal force as the fan 14 rotates. In this embodiment, the fan blades are curved radial blades, which in this example curve from a substantially radial direction to a partially circumferential direction with increasing distance from the axis of rotation. This may help the blades to expel air and thus improve fan performance.

In the arrangement shown in Figure 3, the fan 14 also comprises a flow separator 24. The flow separator 24 is located radially inwards of the inlet ring 20 and radially outwards of the hub 18, at the front of the fan 14 in the airflow direction. The flow separator 24 is in the form of an annular vane. A leading end of the flow separator 24 extends forwards of the inlet ring 20 in an axial direction, and a trailing end of the flow separator 24 extends partway into the fan. The leading end is substantially cylindrical while the trailing end has a diameter which increases with increasing distance into the fan in the direction of airflow. The flow separator 24 defines two separate entry paths for airflow into the fan: a first annular entry path through an aperture between the inner edge of the inlet ring 20 and the radially outwards side of the flow separator 24; and a second annular entry path through an aperture between the radially outwards side of the hub 18 and the radially inwards side of the flow separator. The two entry paths are substantially concentric with each other. The flow separator 24 is used to separate airflows entering the fan from the stator and the rotor.

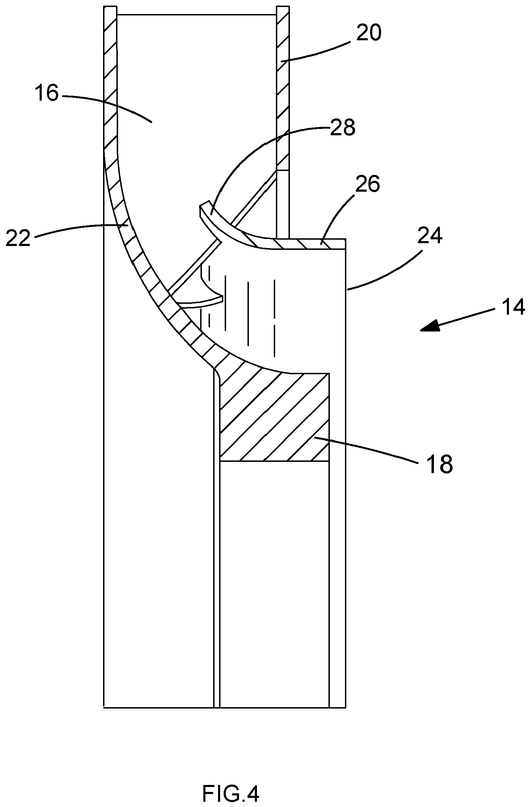

Figure 4 is a cutaway view through part of the fan of Figure 3. Referring to Figure 4, the flow separator is located radially outwards of the hub 18 and radially inwards of the inlet ring 20. The leading end 26 of the flow separator extends forwards (upstream) of the inlet ring 20 and the hub 18, in the direction of airflow. The trailing end 28 of the flow separator extends partway into the fan, behind the inlet ring axially. The leading end 26 is substantially cylindrical, and the trailing end 28 has a curved meridional profile (funnel shaped). The trailing end 28 extends partially into the fan blades 16. However, the flow separator only extends through a relatively small proportion of the fan blades (for example, less than 50% or 25%), allowing a greater proportion of the fan blades 16 to contact airflow from both sides of the flow separator.

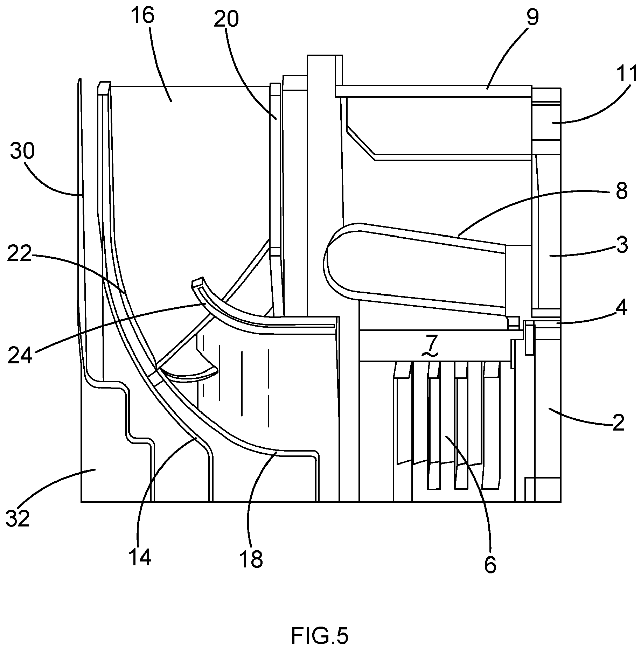

Figure 5 is a cutaway view through part of a rotating electrical machine with the fan of Figures 3 and 4 in place. Referring to Figure 5, the machine comprises a rotor 2 located inside a stator 3 with an airgap 4 between the two. The rotor 2 comprises a rotor core with a plurality of salient poles wound with rotor windings. Rotor end windings 6 extend axially outwards and are supported by a rotor winding support bar 7. The rotor is mounted on a shaft (not shown) which extends axially through the machine. The stator 3 comprises a stator core with stator end windings 8 extending axially outwards. The stator 3 is contained within a stator frame 9. The fan 14 is located at the drive end of the machine and is mounted on the shaft. Also shown in Figure 5 is a coupling disc 30 which is mounted on the shaft via a hub 32. The coupling disc 30 is used to couple rotating parts of the electrical machine to a rotating component of a prime mover, such as an engine flywheel. An adaptor (not shown) is used to connect the stator frame 9 to a non-rotating part of the prime mover such as a flywheel housing. The fan 14 is located inside the adaptor.

In the arrangement of Figure 5, the fan 14 is located between the coupling disc 30 and the drive end of the machine in an axial direction. The inlet ring 20 is arranged to face the stator 3 and the stator/frame airgap 11. The inner edge of the inlet ring 20 is approximately aligned in a radial direction with a midpoint of the stator end windings 8 at their axially outwards end. The leading end of the flow separator 24 extends forwards of the fan towards the machine in an axial direction. The leading end of the flow separator is located radially inwards of the stator end windings 8 and overlaps the end windings 8 in an axial direction. The leading end of the flow separator has a diameter which is approximately equal to the outside diameter of the rotor 2. The trailing end of the flow separator 24 has an outside diameter which is approximately equal to the inside diameter of the inlet ring 20. The area of the fan which is radially inwards of the flow separator 24 and radially outwards of the hub 18 faces the rotor 2.

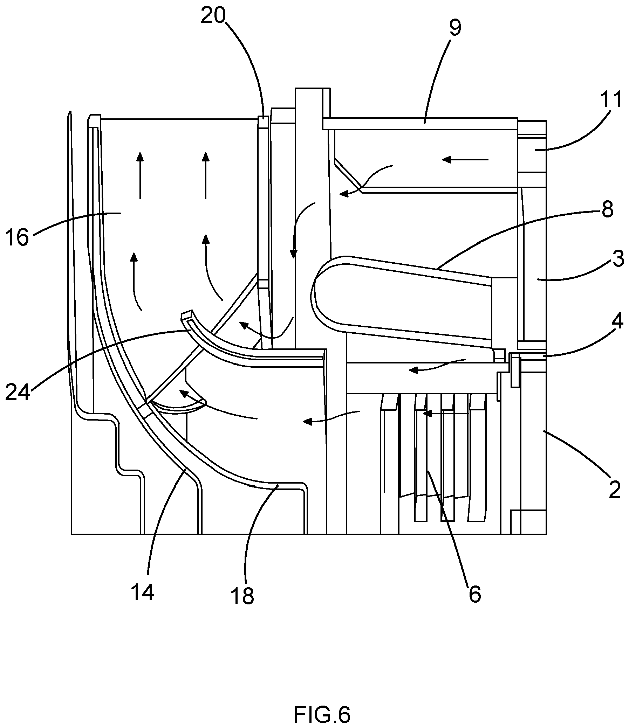

Figure 6 illustrates airflow through the machine of Figure 5 when in operation. As the fan 14 rotates, airflow is drawn through the machine in a substantially axial direction. Airflow is mainly through the stator/frame airgap 11, the rotor/stator airgap 4 and interpolar channels in the rotor 2. Airflow exiting the stator/frame airgap 11 passes over the stator end windings 8 and is deflected downwards by the rotating inlet ring 20. The airflow then encounters the radially outwards side of the flow separator 24. The flow separator guides the airflow from the stator/frame airgap 11 into the fan 14 through the aperture between the inlet ring 20 and the flow separator 24. The trailing end of the flow separator 24 then guides the airflow towards the fan blades 16 in a generally radial direction.

On the other hand, airflow exiting the rotor/stator airgap 4 and the rotor's interpolar channels enters the fan 14 through the aperture between the hub 18 and the radially inwards side of the flow separator 14. The backplate 22 guides the airflow entering the fan in a substantially axial direction towards the fan blades 16 in a generally radial direction. Thus, the airflow entering the fan from around the stator is kept separate from the airflow entering the fan from around the rotor. As a consequence, the two airflows do not impede each other in the same way as in prior designs. This helps to ensure smooth passage of the airflows into the fan without creating a vortex behind the inlet ring. As a consequence, airflow through the fan is improved, thereby improving cooling.

The two airflows converge in the fan blades 16 once they have passed the trailing end of the flow separator 24. As they converge, they are both in a substantially radial direction. Thus, the two airflows are able to converge in the fan blades with minimal interference between the two. The fan blades 16 then cause the converged airflow to be expelled radially (and tangentially) outwards. Using the same fan blades to expel the converged airflow can help to minimise the axial length of the fan and improve its efficiency.

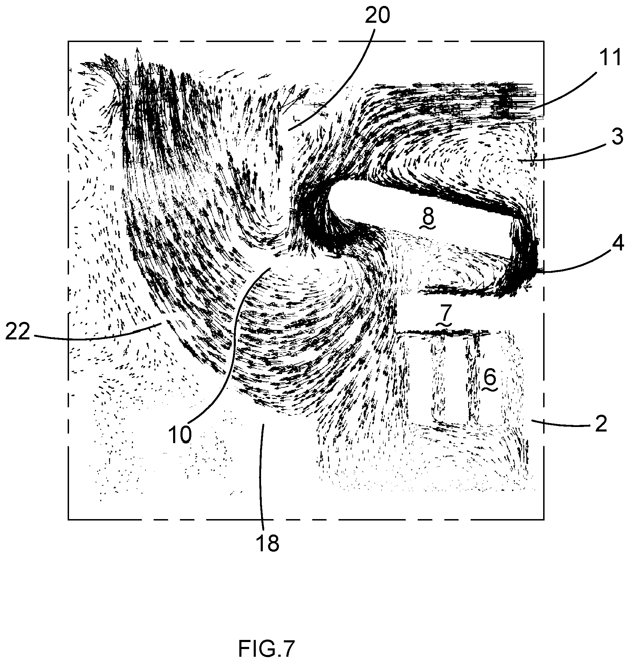

Figure 7 shows a plot of airflow through the fan of Figures 3 to 6. Referring to Figure 7, it can be seen that, at the entry to the fan, the airflow from the stator/frame airgap 11 is separated from the airflow from the rotor/stator airgap 4 and the interpolar channels by the flow separator 24. This helps to avoid the creation of a vortex in the impeller behind the inlet ring. As a consequence, there is a more even spread of airflow through the fan blades, improving the fan's efficiency and allowing more airflow to be drawn through the machine. The two airflows converge after passing the trailing end of the flow separator, when they are both in a substantially radial direction. Thus, the same fan blades are used to produce both airflows, helping to improve efficiency. The flow separator can also help to balance airflows from the stator and the rotor, allow more airflow through the stator/rotor airgap and the interpolar channels than would otherwise be the case. This may help to ensure that airflow is provided through more central parts of the machine where it is most needed.

It has been found that the fan of Figures 3 to 7 can improve the airflow through the machine for a given fan size, thereby increasing the amount of cooling. Alternatively, rather than increasing the airflow, a smaller fan could be used to achieve the same thermal performance, or some combination of the two could be used.

In addition to the above benefits, it has been found that a fan with a flow separator can make use of curved radial blades instead of flat radial blades due to the reduced interaction between the airflows. Thus, in the embodiments described above, the fan comprises curved radial fan blades. This may help the blades to expel air, and thus may help to achieve better fan performance.

The fan described above may be manufactured from any suitable material such as metal, plastic or glass fibre or a combination of different materials. The fan may be manufactured using any appropriate manufacturing technique such as casting, moulding or fabrication, or a combination thereof.

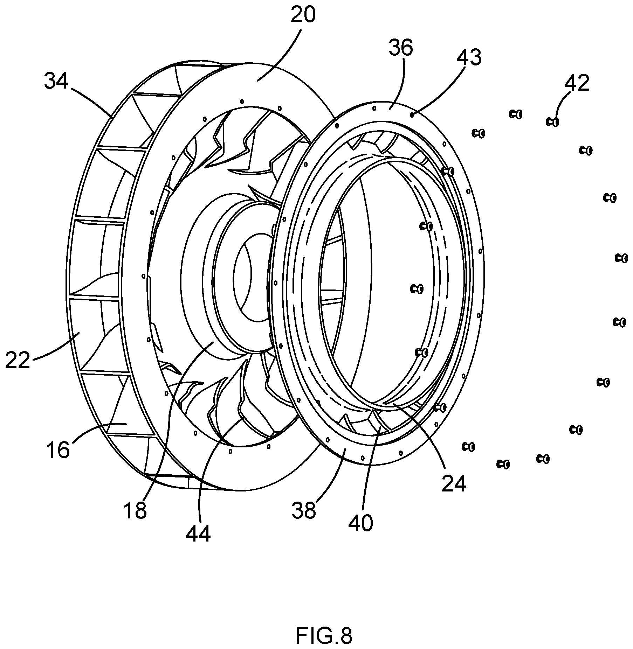

Figure 8 shows how a fan with a flow separator may be manufactured in one possible embodiment. In this embodiment, the flow separator is provided as part of a separate component which is then attached to the fan. Referring to Figure 8, the fan comprises a fan body 34 and a flow separator component 36. The fan body 34 comprises a plurality of fan blades 16, a hub 18, an inlet ring 20 and a backplate 22 which may be substantially in the forms described above. The flow separator component 36 comprises flow separator 24, an attachment ring 38 and a plurality of connecting members 40. The flow separator 24 may be substantially in the form described above. The attachment ring 38 is an annular ring which is concentric with and spaced radially outwards of the flow separator 24. The attachment ring 38 has an inner diameter which is approximately equal to that of the inlet ring 20. The flow separator 24 and the attachment ring 38 are connected together with the connecting members 40. The connecting members 40 are spaced circumferentially around the flow separator component 36. The connecting members 40 have a depth in the axial direction which is greater than their width in a circumferential direction, so as to present a low profile to airflow into the fan. In this embodiment, the number of connecting members 40 is the same as the number of fan blades 16, and the width of the connecting members in a circumferential direction is substantially the same as that of the fan blades. The attachment ring 38 is arranged to attach to the front face of the fan's inlet ring 20. The attachment ring comprises a plurality of holes 43 which are arranged to align with corresponding holes on the inlet ring 20. A plurality of fasteners 42 such as bolts or rivets pass through the holes so as to attach the flow separator component 36 to the fan body 34.

In this embodiment, the fan blades 16 include cutaway portions 44 at the front of the fan axially. The cutaway portions 44 are designed to accommodate at least part of the connecting members 40 when the flow separator component 36 is in place on the fan body 34. The connecting members 40 are arranged to align circumferentially with the fan blades 16 when the flow separator component 36 is in place. In this embodiment, the shape of the connecting members 40 is substantially the same as the cutaway parts 44 of the fan blades. Thus, when the flow separator component 36 is attached to the fan body 34, the connecting members 40 at least partially replace the cutaway parts 44 of the fan blades 16. This allows the flow separator 24 to be connected to the attachment ring 38 in a way which does not impede airflow.

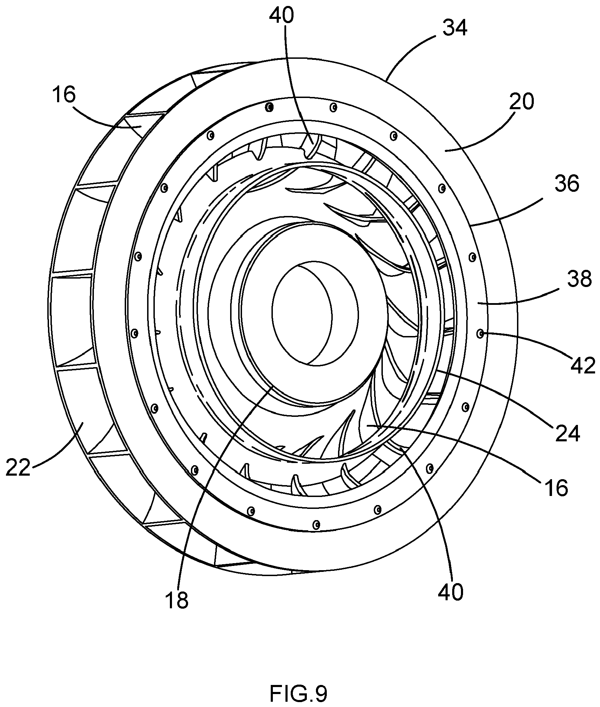

Figure 9 shows the fan of Figure 8 with the flow separator in place. Referring to Figure 9, the flow separator component 36 is attached to the fan body 34 by attaching the attachment ring 38 to the inlet ring 20 using the fasteners 42. The connecting members 40 hold the flow separator 24 in place relative to the attachment ring 38. This locates the flow separator 24 radially inwards of the inlet ring 20 and radially outwards of the hub, and concentric with the two. The connecting members 40 are aligned with the fan blades 16 circumferentially, and fit into the cutaway portions of the blades. Thus, the connecting members 40 at least partially replace the cutaway parts 44 of the fan blades 16.

The arrangement of Figures 8 and 9 may provide the advantage that the fan with flow separator is easy to manufacture. For example, the fan body 34 and the flow separator component 36 may each be manufactured separately using any appropriate technique, such as casting or moulding, using any appropriate material, such as metal or plastic. If desired, the flow separator component could be manufactured from a different material from the fan body. For example, the fan body could be metal and the flow separator component could be plastic or glass fibre. Furthermore, the flow separator can be easily added or removed, depending on whether or not it is required. In addition, different types of flow separator could be used for different applications, without the need to provide different types of fan body, which may further facilitate manufacturing.

In the embodiment of Figures 8 and 9 the fan blades are provided with cutaway portions which accommodate the connecting members on the flow separator component. However, if desired, the cutaway portions could be dispensed with and the positions of the connecting members adjusted accordingly. In this case, the flow separator component could be retrofitted to an existing fan, without the need to make other modifications to the fan.

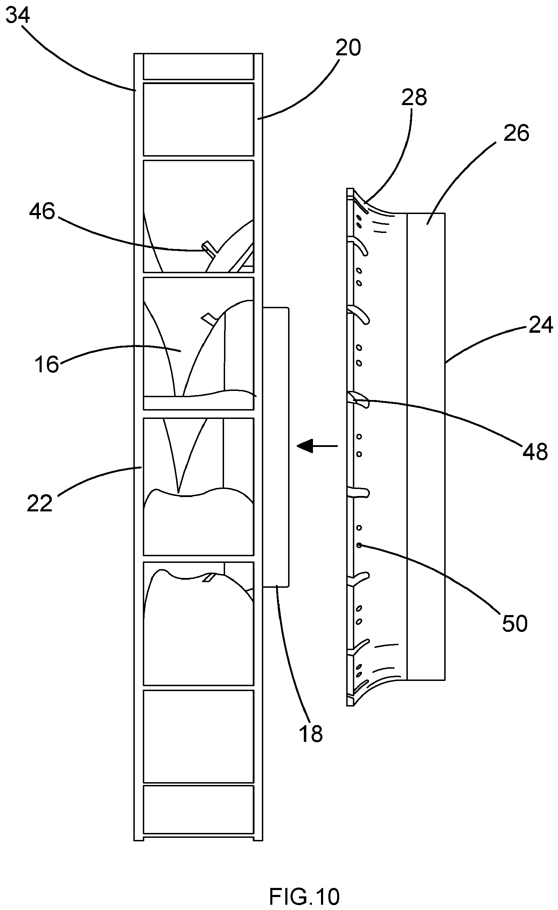

Figures 10 to 13 show how a fan with a flow separator may be manufactured in another possible embodiment. In this embodiment, the flow separator is a separate component which is added to the fan.

Referring to Figure 10, the fan comprises a fan body 34 and a flow separator 24. The fan body 34 comprises a plurality of fan blades 16, a hub 18, an inlet ring 20 and a backplate 22 which may be substantially in the forms described above. However, in this embodiment the fan blades 16 include slots 46 which cooperate with the flow separator 24. The flow separator 24 comprises a leading end 26 and a trailing end 28. The trailing end 28 is provided with a plurality of slots 48 which are spaced circumferentially around the flow separator. The number of slots 48 is equal to the number of fan blades 16. The flow separator 24 also comprises a plurality of holes 50. The holes 50 are provided in pairs, with each pair located approximately halfway between two adjacent slots 48 circumferentially.

In order to assemble the fan, the flow separator 24 and the fan body 34 are brought together in an axial direction. At this stage the slots 48 in the flow separator 24 are aligned with the fan blades 16. As the flow separator 24 and the fan body 34 come together, the blades 16 pass into the slots 48 in the flow separator. This allows the flow separator to be inserted into the fan.

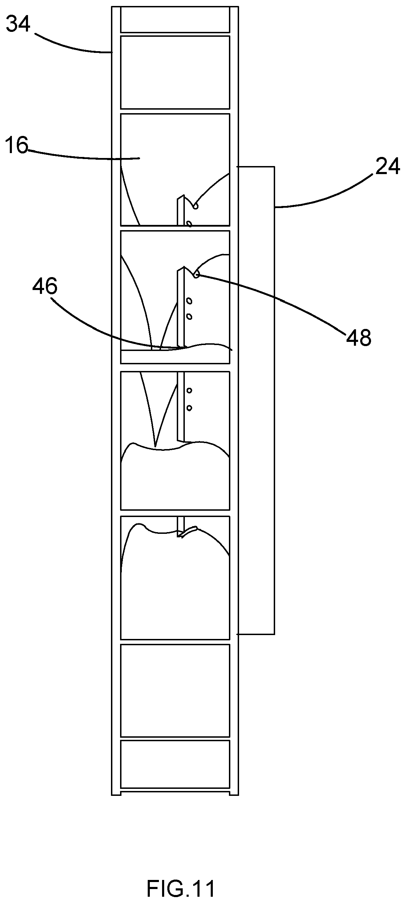

Figure 11 shows the fan of Figure 10 with the flow separator fully inserted. Referring to Figure 11, the fan blades 16 are inserted into the slots 48 in the flow separator. With the flow separator fully inserted, the trailing end of the flow separator is aligned with the slots 46 in the fan blades. The slots 46 in the fan blades have a shape which corresponds to that of the trailing end of the flow separator 24. With the flow separator fully inserted, the flow separator is then rotated with respect to the fan. This moves the slots 48 in the flow separator away from the fan blades 16.

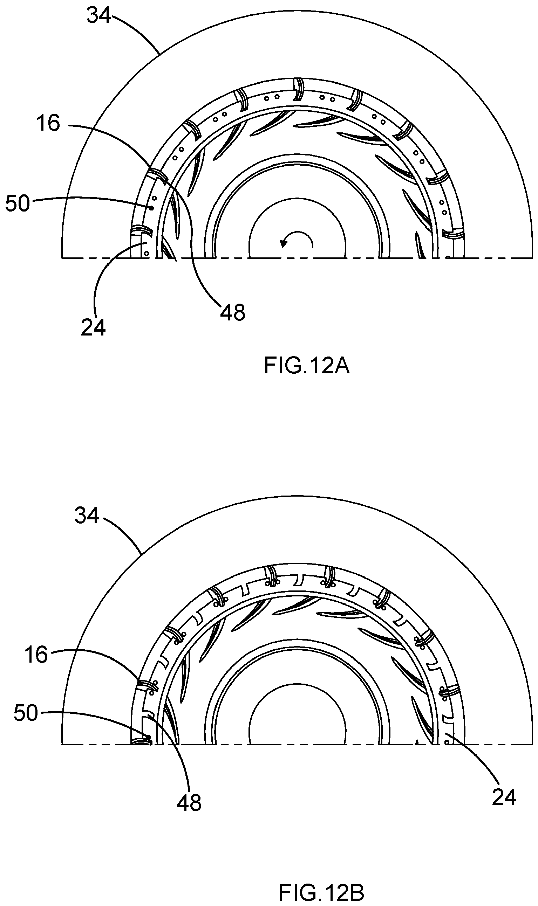

Figures 12(A) and 12(B) illustrate rotation of the flow separator with respect to the fan. Figure 12(A) shows part of the fan body and flow separator prior to rotation. In this position, the flow separator 24 is fully inserted into the fan body 34 in the manner shown in Figure 11. The flow separator 24 is then rotated relative to the fan body 34 about their mutual axis through an angle approximately equivalent to half of the pitch of the fan blades 16. Rotation of the flow separator causes it to move circumferentially through the slots 46 in the fan blades. Figure 12(B) shows part of the fan body and flow separator after rotation. It can be seen that the slots 48 in the flow separator 24 have been moved away from the fan blades 16. This helps to prevent the flow separator detaching from the fan body.

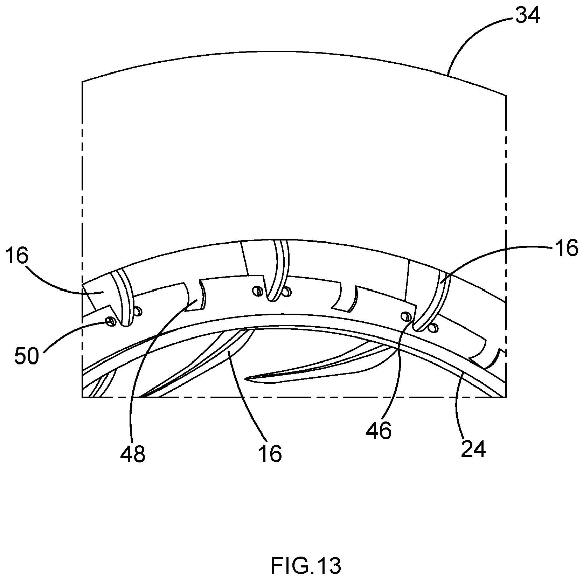

Figure 13 shows part of the fan with the flow separator in place following rotation. It can be seen that the flow separator 24 is located in the slots 46 in the fan blades 16. The slots 48 in the flow separator 24 are located approximately halfway between two adjacent fan blades 16 circumferentially. The holes 50 in the flow separator are located such that one hole of a pair is on one side of a fan blade while the other hole of the pair is on the other side of the fan blade. Pins can then be inserted in the holes 50 to prevent its rotation. This helps to ensure that the flow separator remains in place on the fan during operation.

In the arrangement of Figures 10 to 13 the fan body 34 and the flow separator 24 may each be manufactured separately using any appropriate technique, such as casting or moulding, using any appropriate material, such as metal, plastic or glass fibre. If desired, the flow separator could be manufactured from a different material from the fan body. Furthermore, the flow separator can be easily added, removed or adapted to suit the circumstances.

If the fan and flow separator are both made of metal, then they can be welded together to hold the flow separator in place, or some other means of attachment such as rivets may be used. In this case, the holes 50 may be dispensed with.

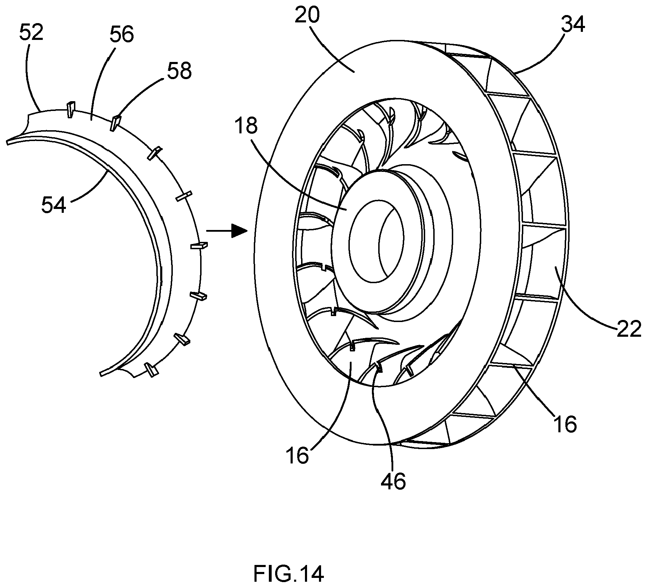

Figures 14 to 16 show how a fan with a flow separator may be manufactured in another possible embodiment. In this embodiment, the flow separator is formed as two separate parts which are added to the fan body. Figure 14 shows the fan body and one of the two flow separator parts. Referring to Figure 14, the fan body 34 comprises a plurality of fan blades 16, a hub 18, an inlet ring 20 and a backplate 22 which may be substantially in the forms described above. The fan blades 16 also include slots 46 in a similar way to the fan described above with reference to Figures 10 to 13.

In the arrangement of Figure 14 the flow separator part 52 is semi-annular, that is, it extends circumferentially through an angle of approximately 180°. The flow separator part 52 comprises a leading end 54 and a trailing end 56. A plurality of ribs 58 are provided spaced apart on the outer edge of the trailing end 56. The number of ribs 58 is equal to the number of fan blades 16 in the fan body 34. In order to assemble the fan, the flow separator part 52 is inserted into the slots 46 in the fan blades 16. Since the flow separator part 52 is semi-annular, it can be bent slightly to facilitate insertion into the slots.

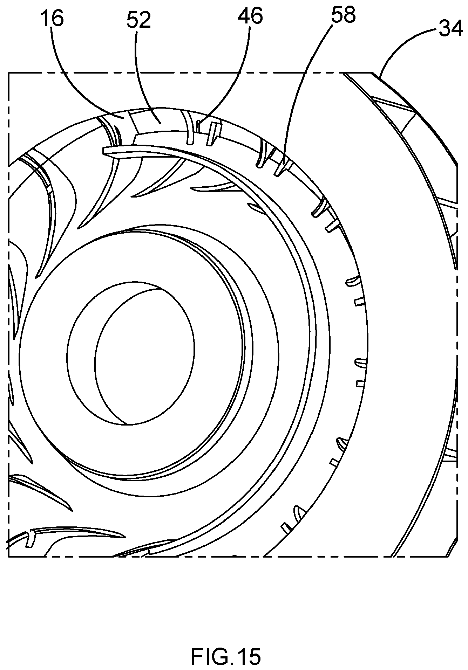

Figure 15 shows part of the fan with one of the flow separator parts 52 inserted into the slots 46 in the fan blades 16. Once the flow separator part 52 has been inserted, it is rotated until the ribs 58 come into contact with the fan blades 16. This helps to secure the flow separator part in the fan. The second flow separator part is then inserted into the fan. A small gap is left between the two flow separator parts 52 in the circumferential direction, to facilitate insertion of the second flow separator part.

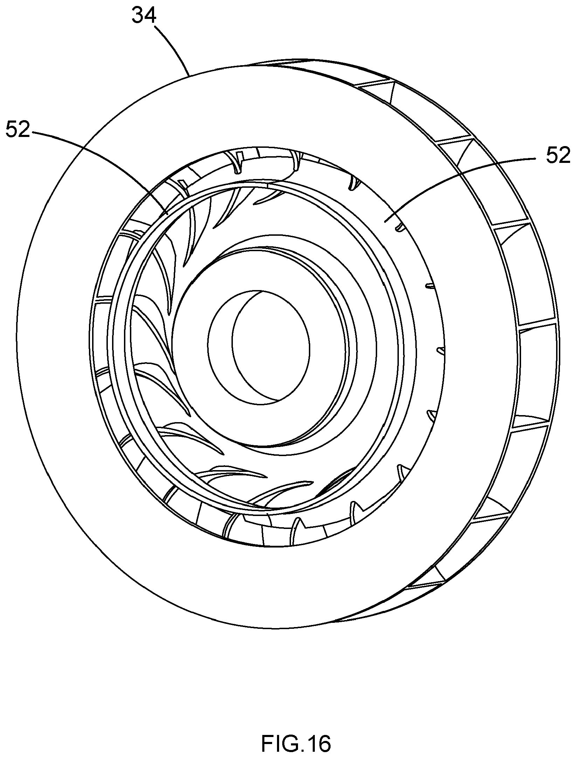

Figure 16 shows the fan with both flow separator parts inserted. Referring to Figure 16, two flow separator parts 52 are provided, each of which extends through an angle of approximately 180° circumferentially (with a small gap between the two to facilitate insertion). The ribs 58 on the flow separator parts are adjacent to the fan blades 16. Once the flow separator parts 52 are in place, they may be fixed together, for example, using rivets or welding or any other attachment means.

In operation, centrifugal force acts on the flow separator parts 52, pushing them into the slots 46 helping to securing them to the fan. Furthermore, since the fan blades are curved in the radial direction, they have a tendency to cause some rotation of the flow separator parts under centrifugal force. The ribs 58 are arranged to prevent such rotation. Thus, the ribs 58 are urged against the fan blades. This helps to secure the flow separator parts to the fan body, and may avoid the need for further attachment means. However, if desired, the flow separator parts may also be fixed to the fan body, for example, by welding.

In the arrangement of Figures 14 to 16 the fan body 34 and the two flow separator parts 52 may each be manufactured separately using any appropriate technique, such as casting or moulding, using any appropriate material, such as metal, plastic or glass fibre. If desired, the flow separator parts could be manufactured from a different material from the fan body. Furthermore, the flow separator parts can be easily added, removed or adapted to suit the circumstances.

In the embodiment of Figures 14 to 16, two semi-annular flow separator parts are shown. However, if desired, a different number of flow separator parts, such as three, four or more, could be used, with each part extending through the appropriate angle circumferentially. Each part may extend through the same angle, or a different angle, or some combination thereof.

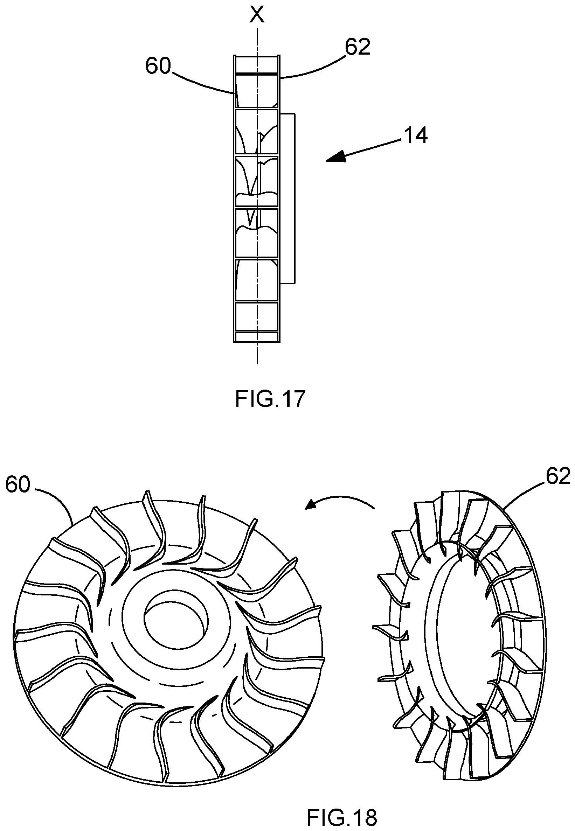

Figures 17 to 19 show how a fan with a flow separator may be manufactured in another possible embodiment. In this embodiment, the fan is formed from two parts which are made separately and then connected together.

Figure 17 illustrates conceptually how the fan may be divided into two separate parts. In this embodiment, the fan is divided along a plane x which is perpendicular to the axial direction, and which passes through the centre of the fan axially. This creates two separate fan parts, a front part 60 and a rear part 62.

Figure 18 shows the two separate parts 60, 62 prior to assembly. Each part may be manufactured separately, for example, by casting, moulding or any other appropriate technique, using any appropriate material, such as metal, plastic or glass fibre. If desired, the two parts could be manufactured from different materials. The fan is then assembled by bringing the two parts 60, 62 together and attaching them to each other.

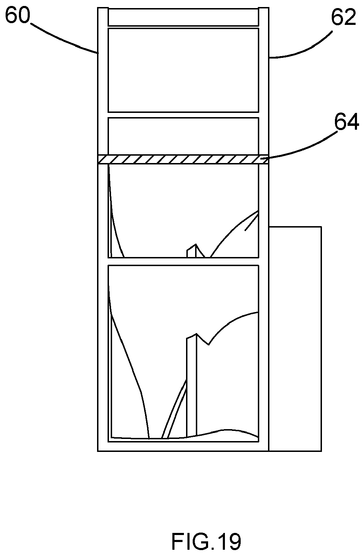

Figure 19 shows part of the assembled fan. The two parts 60, 62 are adjacent to each other axially. In this example, the two parts 60, 62 of the fan are attached together using a plurality of pins 64 which are provided at spaced locations around the fan. However, if desired, other fastening means, such as such as welding, rivets or bolts, could be used as well or instead.

If desired, the fan could be divided along a different plane from that shown in Figure 17. Furthermore, rather than dividing the fan along a plane, it could be divided in some other way. For example, the two parts could be provided with castellations and/or locating features at their intersection to help hold them together. If desired, the fan could be divided into three or more parts.

In the embodiments of Figures 8 to 19, the fan is manufactured from two or more separate parts which are connected together. It has been found that this may allow the fan to have a more complex configuration than might otherwise be the case. For example, this may facilitate manufacture of a fan with curved radial blades. However, manufacturing the fan in two or more parts may add to the cost of manufacture. Thus, in alternative embodiments, the fan may be manufactured as a single part.

It has been found that manufacture of the fan as a single part may be facilitated if the fan comprises flat radial fan blades. For example, casting or moulding the fan may be facilitated if flat radial blades are used. Thus, in alternative embodiments, the fan comprises flat radial blades.

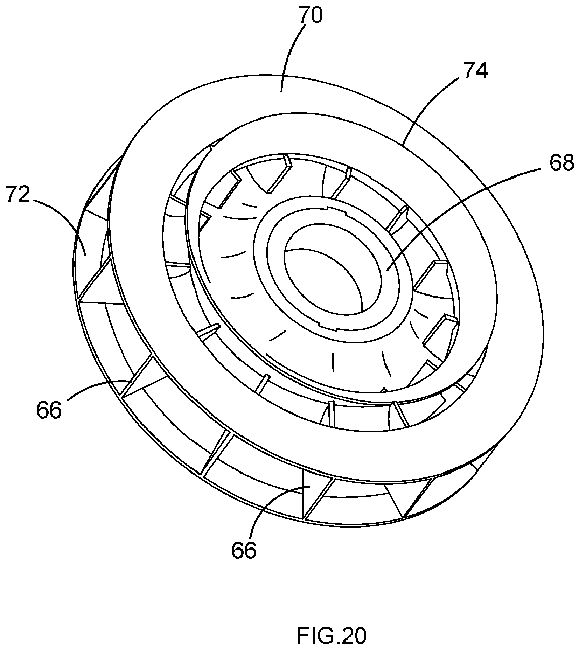

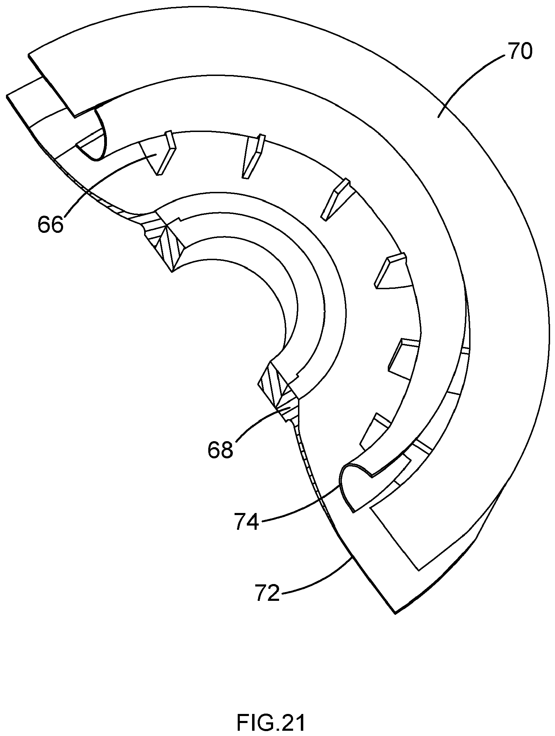

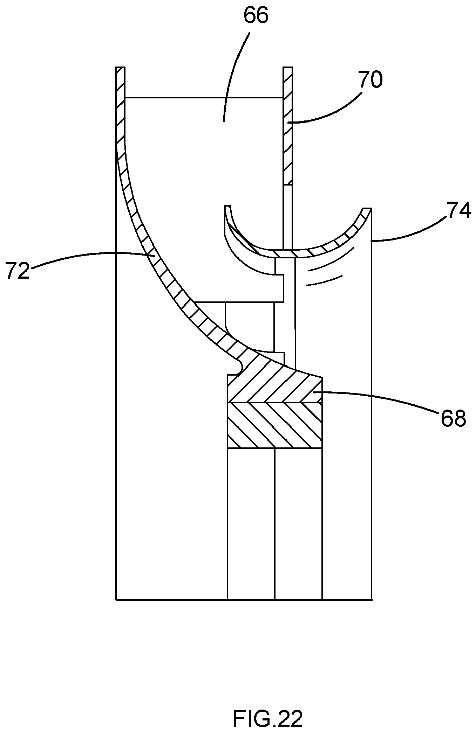

Figures 20 to 22 show a fan with a flow separator in a further embodiment. A perspective view of the fan is shown in Figure 20; a cutaway view of part of the fan is shown in Figure 21; and cross-sectional view through part of the fan is shown in Figure 22.

Referring to Figures 20 to 22, the fan comprises a plurality of fan blades 66, a hub 68, an inlet ring 70, a backplate 72 and a flow separator 74. The fan blades 66 are spaced circumferentially around the fan and extend outwards from the hub 68 in a generally radial direction. The hub 68 is used to mount the fan on the shaft of the machine. The inlet ring 70 is connected to the fan blades 66 at the front of the fan in the airflow direction. The backplate 72 is connected to the hub 68 and the fan blades 66 at the rear of the fan in the airflow direction. The hub 68, inlet ring 70 and backplate 72 may be substantially the same as the corresponding parts described above with reference to Figures 3 to 19.

As in previous embodiments, the fan blades 66 are centrifugal blades which are arranged to dispel air radially (and tangentially) outwards under centrifugal force as the fan rotates. However, in this embodiment, the fan blades extend outwards in a generally radial direction and are substantially flat (do not curve). Thus, in this embodiment, the fan blades are flat radial blades.

In the arrangement shown in Figures 20 to 22, the flow separator 74 is located radially inwards of the inlet ring 70 and radially outwards of the hub 68. A leading end of the flow separator 74 extends forwards (upstream) of the inlet ring 70 in an axial direction, and a trailing end of the flow separator 74 extends partway into the fan, as in the previous embodiments. However, in this embodiment, the leading end of the flow separator 74 flares outwards. Thus, in this embodiment, the leading end is curved, with a diameter which increases as it extends axially forwards from the fan blades.

In this embodiment, airflow exiting the stator/frame airgap and directed downwards (radially inwards) by the inlet ring 70 is guided from a radially inwards direction to a generally axial direction by the curved leading end of the flow separator 74. This helps to ensure a smooth transition of the airflow from a radial direction to an axial direction as it enters the fan. Furthermore, the curved leading end of the flow separator helps to collect airflow from the rotor/stator airgap. Thus, this arrangement may help to prioritise airflow through the rotor/stator airgap, thus allowing more airflow through the centre of the machine than would otherwise be the case.

It has been found that the use of flat radial fan blades may facilitate manufacture of the fan as a single part. Thus, the fan of Figures 20 to 23 may be manufactured as a single part, for example, by casting or moulding. However, if desired, the fan could instead be manufactured from two or more parts, for example, in any of the ways described above.

Furthermore, if desired, a flow separator with a curved leading edge could be used with any of the other embodiments described herein.

Embodiments of the invention have been described above by way of example only, and various modifications are possible. For example, features of one embodiment may be used with any other embodiment. Other modifications in detail will be apparent to the skilled person within the scope of the claims.

## Claims

1. A fan for a rotating electrical machine, the fan (14) comprising:
a plurality of fan blades (16); and
a flow separator (24) for separating a first airflow entering the fan from a radially outwards part of the machine and second airflow entering the fan from a radially inwards part of the machine,
wherein the flow separator (24) extends partway through the fan blades (16) in a direction of airflow.

2. A fan according to claim 1, wherein the flow separator (24) defines a first annular entry path on its radially outwards side and a second annular entry path on its radially inwards side.

3. A fan according to claim 1 or 2, the flow separator (24) comprising a leading end which extends axially forwards from the fan blades (16).

4. A fan according to any of the preceding claims, wherein the fan (14) is arranged such that the first airflow and the second airflow converge in the fan blades.

5. A fan according to claim 4, wherein the fan (14) is arranged such that the first airflow and the second airflow are in substantially the same direction at their confluence.

6. A fan according to any of the preceding claims, the flow separator (24) comprising a trailing end which extends partway into the fan blades (16), wherein the trailing end is preferably arranged to turn airflow from a substantially axial direction to a substantially radial direction.

7. A fan according to any of the preceding claims, further comprising a backplate (22) for turning airflow from a substantially axial direction to a substantially radial direction.

8. A fan according to any of the preceding claims further comprising an inlet ring (20) arranged to direct airflow from a radially outwards part of the machine towards the flow separator (24), wherein a leading end of the flow separator is preferably located radially inwards of the inlet ring.

9. A fan according to any of the preceding claims, further comprising a hub (18) for connecting the fan to a shaft, wherein a leading end of the flow separator is located radially outwards of the hub.

10. A fan according to any of the preceding claims, the fan comprising a fan body and the flow separator (24), wherein the flow separator is a separate component from the fan body.

11. A rotating electrical machine comprising a stator (3), a rotor (2) and a fan (14) according to any of the preceding claims.

12. A rotating electrical machine according to claim 11, wherein the flow separator (24) is arranged such that airflow from around the stator (3) enters the fan separately from airflow from around the rotor (2).

13. A rotating electrical machine according to claim 11, wherein the fan is arranged such airflow from around the stator (3) enters the fan radially outwards of the flow separator (24) and airflow from around the rotor (2) enters the fan radially inwards of the flow separator (24).

14. A rotating electrical machine according to any of claims 11 to 13, wherein the flow separator (24) is configured to increase a proportion of airflow around the rotor (2) with respect to airflow around the stator (3).

15. A method of cooling a rotating electrical machine using a fan, the fan (14) comprising a plurality of fan blades (16) and a flow separator (24), the method comprising:
drawing airflow through the machine using the fan (14); and
separating airflow entering the fan from a radially outwards part of the machine from airflow entering the machine from a radially inwards part of the machine using a flow separator (24), the flow separator extending partway through the fan blades (16) in a direction of airflow.
